# EUROPEAN PATENT APPLICATION

(11) **EP 4 360 972 A1**
(43) Date of publication of application: **01.05.2024**
(21) Application number: 22203753.3
(22) Date of filing: 26.10.2022
(51) Int. Cl.: B60T 17/22, B61H 5/00, F16D 55/224, F16D 65/18, B60T 13/74

(54) **BRAKE UNIT FOR A RAIL VEHICLE**

(71) Applicant: Dellner Bubenzer AB, 781 70 Borlänge (SE)
(72) Inventor: PRIM, Viktor, 811 61 SANDVIKEN (SE)
(74) Representative: Brann AB

(57) **Abstract**

A rail vehicle brake unit (200) contains a brake actuator (120), at least one pressing member (211), a gear assembly (220), an electric motor (230) and a backup power unit (123). The brake actuator (120) receives a brake command (cmd_{B}) and produces an electric brake-force signal (BF) to the electric motor (230) that, in turn, acts on the gear assembly (220) to cause the at least one pressing member (211) to attain a specified position in relation to a rotatable member (110) mechanically linked to at least one wheel (105) of a rail vehicle so as to apply a braking force thereto. During operation of the rail vehicle, the backup power unit (123) receives electric power (W) from a power line (140) in the rail vehicle and accumulates the received electric power (W). In case of an electric power failure (PF) in the electric power (W) received in the brake actuator (120), the backup power unit (123) provides the accumulated electric power to control circuitry in the brake actuator (120) and the electric motor (230).

## Description

### TECHNICAL FIELD

The present invention relates generally to retardation of rail vehicles. Especially, the invention relates to a brake unit for a rail vehicle according to the preamble of claim 1.

### BACKGROUND

In operation of an electrically powered rail vehicle, the onboard motors are typically engaged as generators to decelerate the rail vehicle. However, for efficiency and safety reasons, one cannot rely solely on this braking strategy. In particular, a brake function will always be needed to ensure emergency braking functionality and that the rail vehicle remains stationary after that it has been brought to a stop.

In many cases, the same brake units are used for different types of braking functionality, such as service braking, emergency braking and parking braking. Today's rail vehicle brakes characteristically use pneumatically regulated brakes. This is disadvantageous inter alia due to their slow and imprecise regulation, however also because the risk of leakages and resulting malfunction.

Recently, electrically controlled brakes have been presented as an alternative to pneumatically regulated brakes. For example, US 2020/0198605 describes a microcomputer-controlled electromechanical braking system containing an electromechanical braking control device and an electromechanical braking unit. The electromechanical braking control device includes a braking microcomputer control unit, an electromechanical control unit and a standby power supply module. The braking microcomputer control unit receives a braking instruction signal sent by a driver or an automatic driving system, performs the calculation of a target braking force and braking management. If the electromagnetic brake is powered off, a screw-and-nut arrangement locks the brake to maintain the braking force. When a torque motor rotor rotates reversely, the nut makes a translational motion reversely, and the braking force is released.

US 2016/0193928 shows a backup power system for a railroad power unit that includes an emergency backup generator enabling continuous operation of both traction motors and accessories on the power unit when a main generator and/or an accessory power unit (APU) become inoperable. The backup generator can provide power to accessories on the railcar when the APU becomes inoperable and when power provided by the APU is diverted to the traction motors due to the main generator becoming inoperable.

Thus, an electromechanical braking system is known, which has a locking mechanism to maintain an already applied brake force if the power supply to the brake fails. There is also a solution for providing backup power to the accessories on a railcar if a main generator becomes inoperable. However, there is no technical solution ensuring that an electrically controlled brake unit remains operable should the power supply to the brake unit be interrupted.

### SUMMARY

The object of the present invention is therefore to address the above and offer an improved reliability of an electrically operated brake unit for a rail vehicle.

According to the invention, the object is achieved by a brake unit for a rail vehicle, which brake unit contains a brake actuator, at least one pressing member, a gear assembly, an electric motor and a backup power unit. The brake actuator is configured to receive a brake command, and in response thereto produce an electric brake-force signal. The at least one pressing member is configured to apply a braking force to a rotatable member mechanically linked to at least one wheel of the rail vehicle. The gear assembly is arranged to operate mechanically on the at least one pressing member. The electric motor is configured to act on the gear assembly in response to the electric brake-force signal, so as to cause the at least one pressing member to move towards or away from the rotatable member and attain a specified position in relation thereto. The backup power unit is configured to receive electric power from a power line in the rail vehicle during operation of the rail vehicle and accumulate the received electric power. In case of an electric power failure in the electric power received in the brake actuator via the power line, the backup power unit is configured to provide the accumulated electric power to control circuitry in the brake actuator and the electric motor.

The above brake unit is advantageous because it enables braking functionality even if the power supply cable to the brake unit is broken. At least theoretically, if a signal line for transferring the brake command is still intact, the brake unit may thus continue to operate as a service brake also in case of such a power failure.

According to one embodiment of the invention, the backup power unit contains at least one rechargeable battery and a battery charger, which is connected to the power line. The battery charger is configured to transfer electric power received from the power line to the at least one rechargeable battery. If the reception of the electric power in the brake actuator is interrupted, the at least one rechargeable battery is arranged to feed electric power to the control circuitry in the brake actuator and the electric motor.

Furthermore, arranging the control circuitry in the brake actuator is advantageous because thereby the brake unit is controllable in a highly distributed manner that renders the brake control minimally susceptible to electromagnetic interference.

Alternatively, or in addition thereto, according to one embodiment of the invention, the backup power unit contains at least one capacitive element, for example in the form of one or more relatively powerful capacitors. The backup power unit also contains at least one rectifying, for instance a diode, connected to the power line and configured to transfer electric power received from the power line to the at least one capacitive element. Analogous to the above, if the reception of the electric power in the brake actuator is interrupted, the at least one capacitive element is arranged to feed electric power to the control circuitry in the brake actuator and the electric motor. Consequently, a space efficient electric power supply for emergency situations is provided.

Preferably, the backup power unit is included in the brake actuator. Namely, thereby, a supply electric power is guaranteed even if a cable break occurs immediately outside the brake actuator.

According to another embodiment of the invention, a processing unit is included in the control circuitry of the brake actuator. The processing unit, in turn, is configured to produce the electric brake-force signal based on the brake command. It is beneficial to include a processing unit in the brake actuator because this enables a high flexibility in terms of the manner in which the electric brake-force signal is produced, and/or the bases for producing this signal.

According to yet another embodiment of the invention, if the processing unit detects that there is an electric power failure in the electric power received in the brake actuator via the power line, the processing unit is configured to produce the electric brake-force signal in such a manner that the electric motor acts on the gear assembly to cause the at least one pressing member to apply a predefined emergency brake force to the rotatable member. Typically, if the power line fails, this also means that the communication with the brake unit is disrupted, or broken. It is therefore a reasonable strategy to activate emergency braking in response to an input power failure in the brake unit.

According to still another embodiment of the invention, the brake actuator contains an accelerometer configured to produce at least one vector signal representing an acceleration in at least one dimension of a railroad car in which the brake actuator is included. The at least one vector signal thus expresses a movement of the railroad car. The brake actuator is here configured to produce the electric brake-force signal on the further basis of the at least one vector signal. As a result, the brake actuator may produce the electric brake-force signal dynamically depending on how the railroad car reacts to the brake force being applied. This, in turn, allows for high-efficiency braking.

According to yet another embodiment of the invention, the brake unit contains a position sensor configured to produce a position signal indicating an angular position of a power transmission shaft of the electric motor. Here, the brake actuator is configured to receive the position signal, and based thereon determine whether the specified position for the at least one pressing member in relation to the rotatable member has been attained. If so, the brake actuator is configured to stop producing the electric brake-force signal. Hence, braking can be effected efficiently and reliably.

According to a further embodiment of the invention, the brake unit contains a load-cell sensor configured to produce a sensor signal representing the magnitude of a force applied by the at least one pressing member on the rotatable member. The brake actuator is here configured to receive the sensor signal, and based thereon generate a status message confirming that the brake command has been effected. This is advantageous because it enables presentation of adequate feedback information to a driver of the rail vehicle.

Alternatively, the processing unit may be configured to determine the magnitude of a force applied by the at least one pressing member on the rotatable member based on a drive current fed to the electric motor. Based on said force, in turn, the processing unit is further configured to generate a status message confirming that the brake command has been effected. Thus, no dedicated force sensor is required.

According to another embodiment of the invention, the brake actuator has a wireless interface configured to receive a wireless signal representing a rotational speed of the at least one wheel being mechanically linked to the rotatable member. Here, the brake actuator is configured to produce the electric brake-force signal on the further basis of the rotational speed of the at least one wheel. Consequently, the brake actuator may produce the electric brake-force signal dynamically depending on how the braking influences the wheel speed, such that for example wheel locking can be avoided, even during emergency braking due to a power failure.

According to still another embodiment of the invention, the gear assembly includes a worm gear arrangement with such a gearing ratio that it de facto prevents the specified position of the at least one pressing member in relation to the rotatable member to be altered by movement of said member(s). This means that any unintentional repositioning of the at least one pressing member can be avoided.

According to yet another embodiment of the invention, the brake actuator is connected to at least one data bus in the rail vehicle, e.g. a serial bus. The at least one data bus is configured to communicate control signals and/or status messages to/from the brake actuator. Thereby, the brake unit may be controlled in an efficient and flexible manner with high reliability. Preferably, the brake actuator is further configured to receive the brake command as a control signal via one of said data busses.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: schematically illustrates a rail vehicle equipped with a brake unit according to one embodiment of the invention;
- Figure 2: shows a brake unit according to one embodiment of the invention;
- Figures 3-4: show backup power units according to different embodiments of the invention; and
- Figure 5: shows an accelerometer for registering movements of the rail vehicle according to one embodiment of the invention; and
- Figure 6: exemplifies a mechanical self-locking mechanism according to one embodiment of the invention.

### DETAILED DESCRIPTION

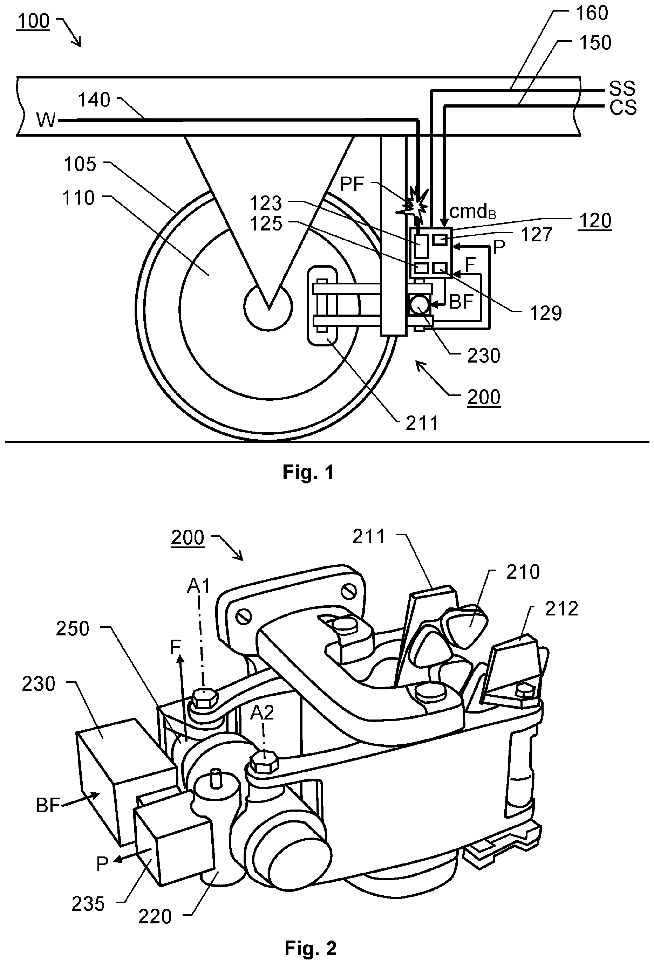

Figure 1 schematically illustrates a rail vehicle 100 equipped with a brake unit 200 according to one embodiment of the invention. In Figure 2; we see a perspective view of the brake unit 200 according to one embodiment of the invention.

The proposed brake unit 200 includes a brake actuator 120, at least one pressing member, here exemplified by 211 and 212, a gear assembly 220, an electric motor 230 and a backup power unit 123.

The brake actuator 120 is configured to receive a brake command cmd_{B}, for example via a data bus 150 in the rail vehicle 100, which data bus 150 is configured to communicate control signals CS. The data bus may be a serial bus employing the CAN (Controller Area Network) format. Alternatively, the data bus 150 may employ the Factory Instrumentation Protocol (FIP), which most current definition can be found in the European standard EN50170; the Multifunction Vehicle Bus (MVB) protocol, for instance defined by the European standard EN61375 or the TCP/IP (Transmission Control Protocol/Internet Protocol). In response to the brake command cmd_{B}, the brake actuator 120 is configured to produce an electric brake-force signal BF.

Each of the pressing members 211 and 212 is configured to apply a braking force to a rotatable member 110, which is mechanically linked to at least one wheel 105 of the rail vehicle 100. Thus, the pressing members 211 and 212 may be represented by a pair of calipers and the rotatable member 110 may be represented by a brake disc. Alternatively, the rotatable member 110 may be represented by a brake drum being mechanically linked to at least one wheel 105 of the rail vehicle 100. In such a case, it may be sufficient with a single pressing member that is configured to be pressed against an exterior or interior surface of the brake drum.

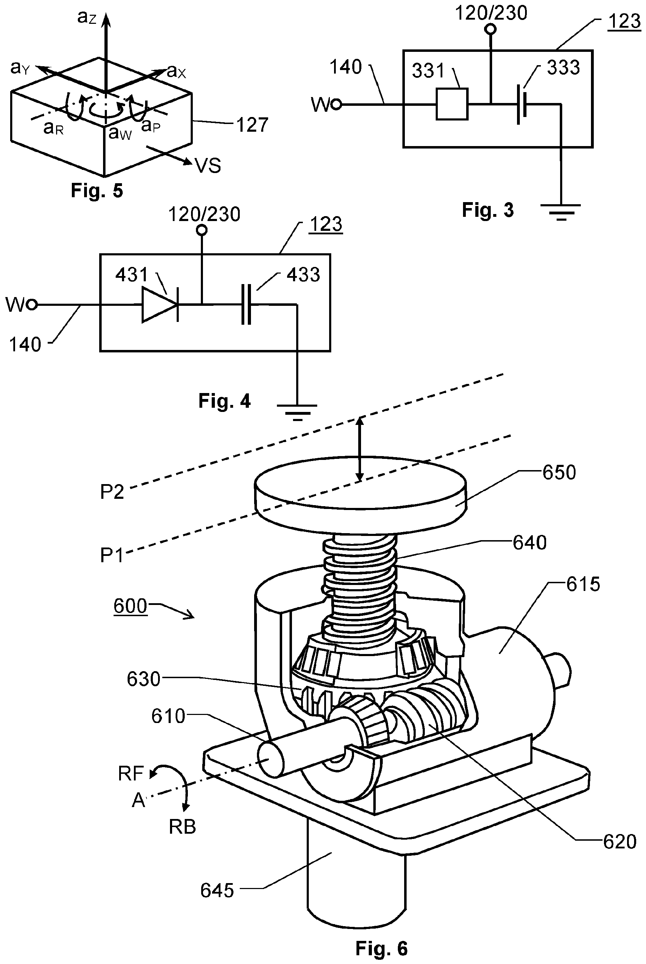

The gear assembly 220 is arranged to operate mechanically on the pressing members 211 and 212. Functionally, the gear assembly 220 is located between the electric motor 230 and the pressing members 211 and 212. Figure 6 shows an example of the gear assembly 220 according to one embodiment of the invention, where the gear assembly 220 contains a worm gear arrangement 300. In response to the electric brake-force signal BF, the electric motor 230 is configured to act on the gear assembly 220 so as to cause the pressing members 211 and 212 to move towards or away from the rotatable member 110 and attain a specified position in relation to the rotatable member 110. Here, a first specified position may correspond to a released state for the brake, i.e. wherein the rotatable member 110 and the at least one wheel 105 are enabled to rotate; and a second specified position may correspond to a fully braked state, wherein the pressing members 211 and 212 apply a braking force to the rotatable member 110 so as to keep the at least one wheel 105 immobile. Naturally, according to the invention, any number of intermediate states between the first and second states are conceivable, which intermediate states correspond to various magnitudes of braking force being applied to the at least one wheel 105. Thus, the electric brake-force signal BF may for example order adjusting or releasing an already applied brake force.

The backup power unit 123 is configured to receive electric power W from a power line 140 in the rail vehicle 100 during operation of the rail vehicle 100. The electric power W may have been received in the rail vehicle 100 via a current collector, or the electric power W may originate from a generator onboard the rail vehicle 100. The backup power unit 123 is configured to accumulate the received electric power W; and in case of an electric power failure PF in the electric power W received in the brake actuator 120 via the power line 140, the backup power unit 123 is configured to provide the accumulated electric power to control circuitry in the brake actuator 120 and the electric motor 230.

Figure 3 shows a backup power unit 123 according to a first embodiment of the invention, where the backup power unit 123 contains at least one rechargeable battery 333. Here, the backup power unit 123 further includes a battery charger 331, which is connected to the power line 140 and is configured to transfer electric power W received from the power line 140 to the at least one rechargeable battery 333. The at least one rechargeable battery 333 is arranged to feed electric power to the control circuitry in the brake actuator 120 and the electric motor 230 if the reception of the electric power W in the brake actuator 120 is interrupted.

Figure 4 shows a backup power unit 123 according to a second embodiment of the invention, where the backup power unit 123 contains at least one capacitive element 433, such as one or more capacitors, which preferably have relatively high capacity. The backup power unit 123 also includes at least one rectifying element 431. In Figure 4, this is symbolized by a diode 431. If the power line 140 and is configured to transfer electric power W in the form of direct current, such a single diode is typically sufficient to prevent electric charges from being unintentionally discharged from the at least one capacitive element 433, for example in case of a cable break outside of the backup power unit 123.

If, the electric power W received from the power line 140 is of alternating-current type, it is typically advantageous if the backup power unit 123 includes rectifying elements in the form of a diode bridge containing four diodes connected to the power line 140 and is configured to convert the incoming alternating-current power to direct-current power to the at least one capacitive element 433.

In any case, regardless of the type of electric power W received from the power line 140; analogous to the above, if the reception of the electric power W in the brake actuator 120 is interrupted, the at least one capacitive element 433 is arranged to feed electric power to the control circuitry in the brake actuator 120 and the electric motor 230.

For safety and reliability reasons, it is generally preferable that the backup power unit 123 is included in the brake actuator 120. Namely, in such a case, the brake actuator 120 may continue to be operable, for example to effect emergency braking, even if all the wiring to the brake actuator 120 is torn off.

According to one embodiment of the invention, the control circuitry in the brake actuator 120 includes a processing unit 125, which is configured to produce the electric brake-force signal BF based on the brake command cmd_{B}. The processing unit 125, may further be configured to supervise the electric power W received in the brake actuator 120 via the power line 140. According to one embodiment of the invention, if the processing unit 125 detects that there is an electric power failure PF in the electric power W received in the brake actuator 120 via the power line 140, the processing unit 125 is configured to instigate emergency braking by producing the electric brake-force signal BF such that the electric motor 230 acts on the gear assembly 220 to cause the pressing members 211 and 212 to apply a predefined emergency brake force to the rotatable member 110.

The electric motor 230 may be implemented by a stepper motor, This is advantageous because the stepper motor provides highly accurate positioning of its power transmission shaft without requiring a position sensor for feedback. The stepper motor is typically a brushless DC electric motor that divides a full rotation into a number of equal steps, say 100, which may be provided by a gear-shaped iron rotor with 25 teeth giving 3,6 degrees of rotation per step. The stepper motor can be commanded to move and hold a position at one of these steps by open loop control provided that the motor is adapted to the application in respect to torque and speed.

Alternatively, according to one embodiment of the invention, the brake unit 200 includes a dedicated position sensor 235, which is configured to produce a position signal P that indicates an angular position of a power transmission shaft of the electric motor 230. Here, the brake actuator 120 is configured to receive the position signal P, and based thereon determine whether the pressing members 211 and 212 have attained the specified positions in relation to rotatable member 110. If the brake actuator 120 determines that the pressing members 211 and 212 have attained the specified positions in relation to rotatable member 110, the brake actuator 120 is configured to stop producing the electric brake-force signal BF. As a result, the pressing members 211 and 212 remain stationary in the specified positions. If, however, the brake unit 200 determines that the specified position interrelationship has not been attained, the brake unit 200 is configured to continue producing the electric brake-force signal BF until the specified position interrelationship has been attained.

According to one embodiment of the invention, the brake actuator 120 contains an accelerometer 127 configured to produce at least one vector signal VS representing an acceleration a_{X}, a_{Y}, a_{Z}, a_{R}, a_{P}, and/or aw in at least one dimension of a railroad car in which the brake actuator 120 is comprised. Thus, the at least one vector signal VS expresses a movement of said railroad car, for example in the form of a speed along the rails. Moreover, the brake actuator 120 is configured to produce the electric brake-force signal BF on the further basis of the at least one vector signal VS. Consequently, the electric brake-force signal BF may be dynamically adjusted in response to how the railroad car reacts to the electric brake-force signal BF during the braking process.

According to one embodiment of the invention, the brake unit 200 includes a load-cell sensor 250 configured to produce a sensor signal F that represents the magnitude of a force applied by the pressing members 211 and 212 on the rotatable member 110. The control circuitry in the brake actuator 120 is configured to receive the sensor signal F, and based thereon generate a status message SS confirming that the brake command cmd_{B} has been effected. Thereby, adequate feedback information can be presented to a driver of the rail vehicle, for instance on a control panel of a driver's cabin.

According to another embodiment of the invention, the processing unit 125 is configured to determine the magnitude of the force applied by the at least one pressing member 211 and 212 on the rotatable member 110 based on a drive current fed to the electric motor 230. In other words, the functionality of the above load-cell sensor 250 is here implemented internally in the processing unit 125, for example by running a software through which the sensor signal F is calculated using the drive current as an input parameter. The processing unit 125 is further configured to generate a status message SS confirming that the brake command cmd_{B} has been effected based on the derived force, typically when a predefined force has been determined.

According to one embodiment of the invention, the brake actuator 120 includes a wireless interface 129 configured to receive a wireless signal representing a rotational speed of the at least one wheel 105 that is mechanically linked to the rotatable member 110. Here, the brake actuator 120 is configured to produce the electric brake-force signal BF on the further basis of the rotational speed of the at least one wheel 105. As a result, the brake actuator 120 may produce the electric brake-force signal BF dynamically depending on how the braking influences the wheel speed, such that for example wheel locking can be avoided. Since the rotational speed signal is received wirelessly, such control of the electric brake-force signal BF may be performed even in case of emergency braking due to a power failure.

According to one embodiment of the invention, the brake unit 200 further contains a load-cell sensor 250 configured to produce a sensor signal F representing the magnitude of a force applied by the pressing members 211 and 212 on the rotatable member 110. The load-cell sensor 250 may be a ring-torsion type of sensor arranged on a first axis A1 included in a mechanical link between the gear assembly 220 and a first one 211 of the pressing members. Additionally, or alternatively, the load-cell sensor 250 may be arranged on a second axis A2 included in a mechanical link between the gear assembly 220 and a second one 212 of the pressing members.

Additionally, or alternatively, one or more load-cell sensors, e.g. of bending, shear, compression and/or tension type, may be arranged on the first and second pressing members 211 and 212.

It is generally advantageous to include processing circuitry in the brake actuator 120 and produce the sensor signal F, the at least one vector signal VS and/or the position signal P physically close to the brake actuator 120. Namely, this reduces the risk that said signals are deteriorated by interference, e.g. from radiating electromagnetic energy, before being processed, or by other means being acted upon.

Preferably, the brake actuator 120 is configured to receive the sensor signal F, and based thereon generate a status message SS confirming that the brake command cmd_{B} has been effected.

The brake command cmd_{B} may be sent as a control signal CS over a data bus 150 in the rail vehicle 100. According to one embodiment of the invention, the rail vehicle 100 contains at least one first data bus 150 configured to communicate control signal CS. As mentioned above, the rail vehicle 100 preferably also contains at least one second data bus 160 configured to communicate status messages SS, for example reflecting a current state of the brake, and/or the position interrelationship between the first and second pressing members 211 and 212. Analogous to the data bus 150, the at least one second data bus 160 is preferably a serial bus employing one of the communication formats mentioned above.

Referring now to Figure 6, we seen an example of the gear assembly 220 according to one embodiment of the invention, where the gear assembly 220 contains a worm gear arrangement 600 with a gearing ratio configured to de facto prevent the specified position between the pressing members 211 and 212 respectively and the rotatable member 110 to be altered by movement of one or both of the pressing members 211 and/or 212, i.e. pushing/pulling the load pad 650 to cause the power transmission shaft 610 to rotate in the forward or backward directions RF/RB. Consequently, the specified positions of the pressing members 211 and 212 in relation to the rotatable member 110 cannot be altered by movement of the pressing members 211 and 212 by other means than via the worm gear arrangement 600. In other words, here, the worm gear arrangement 600 constitutes a self-locking mechanism in respect of the pressing members 211 and 212.

Mechanical power is fed into the worm gear arrangement 600 via a power transmission shaft 610 of the electric motor 230. The electric motor 230 is configured to rotate the power transmission shaft 610 in a forward direction RF or a backward direction RB. As a result, a load pad 650 is fed outward or inward, for example between first and second positions P1 and P2 respectively by action of an input worm 620 on a worm gear 630 acting on a lifting screw 640. Preferably, the worm gear arrangement 600 further includes first and second protection tubes 615 and 645 covering the input worm 620 and the lifting screw 640 respectively.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake unit (200) for a rail vehicle (100), which brake unit (200) comprises:
a brake actuator (120) configured to receive a brake command (cmd_{B}), and in response thereto produce an electric brake-force signal (BF),
at least one pressing member (211, 212) configured to apply a braking force to a rotatable member (110) mechanically linked to at least one wheel (105) of the rail vehicle (100),
a gear assembly (220) arranged to operate mechanically on the at least one pressing member (211; 212),
an electric motor (230) configured to act on the gear assembly (220) in response to the electric brake-force signal (BF), so as to cause the at least one pressing members (211; 212) to move towards or away from the rotatable member (110) and attain a specified position in relation thereto, and
a backup power unit (123) configured to receive electric power (W) from a power line (140) in the rail vehicle (100) during operation of the rail vehicle (100); accumulate the received electric power (W); and provide the accumulated electric power to control circuitry in the brake actuator (120) and the electric motor (230) in case of an electric power failure (PF) in the electric power (W) received in the brake actuator (120) via the power line (140).

2. The brake unit (200) according to claim 1, wherein the backup power unit (123) comprises:
at least one rechargeable battery (333), and
a battery charger (331) connected to the power line (140) and configured to transfer electric power (W) received from the power line (140) to the at least one rechargeable battery (333), wherein the at least one rechargeable battery (333) is arranged to feed electric power to the control circuitry in the brake actuator (120) and the electric motor (230) if the reception of the electric power (W) in the brake actuator (120) is interrupted.

3. The brake unit (200) according to any one of the claims 1 or 2, wherein the backup power unit (123) comprises:
at least one capacitive element (433), and
at least one rectifying element (431) connected to the power line (140) and configured to transfer electric power (W) received from the power line (140) to the at least one capacitive element (433),
wherein the at least one capacitive element (433) is arranged to feed electric power to control circuitry in the brake actuator (120) and the electric motor (230) if the reception of the electric power (W) in the brake actuator (120) is interrupted.

4. The brake unit (200) according to any one of the preceding claims, wherein the backup power unit (123) is comprised in the brake actuator (120).

5. The brake unit (200) according to any one of the preceding claims, wherein the control circuitry comprised in the brake actuator (120) includes a processing unit (125) configured to produce the electric brake-force signal (BF) based on the brake command (cmd_{B}).

6. The brake unit (200) according to claim 5, wherein, if the processing unit (125) detects that there is an electric power failure (PF) in the electric power (W) received in the brake actuator (120) via the power line (140), the processing unit (125) is configured to:
produce the electric brake-force signal (BF) such that the electric motor (230) acts on the gear assembly (220) to cause the at least one pressing member (211; 212) to apply a predefined emergency brake force to the rotatable member (110).

7. The brake unit (200) according to any one of the preceding claims, wherein the brake actuator (120) comprises an accelerometer (127) configured to produce at least one vector signal (VS) representing an acceleration (a_{X}, a_{Y}, a_{Z}, a_{R}, a_{P}, a_{W}) in at least one dimension of a railroad car in which the brake actuator (120) is comprised, which at least one vector signal (VS) expresses a movement of said railroad car, and the brake actuator (120) is configured to produce the electric brake-force signal (BF) on the further basis of the at least one vector signal (VS).

8. The brake unit (200) according to any one of the preceding claims, further comprising a position sensor (235) configured to produce a position signal (P) indicating an angular position of a power transmission shaft of the electric motor (230), and wherein the brake actuator (120) is configured to receive the position signal (P), and based thereon determine whether the at least one pressing member (211, 212) has attained the specified position in relation to rotatable member (110); and if so, stop producing the electric brake-force signal (BF).

9. The brake unit (200) according to any one of the preceding claims, further comprising a load-cell sensor (250) configured to produce a sensor signal (F) representing the magnitude of a force applied by the at least one pressing member (211, 212) on the rotatable member (110), and
wherein the brake actuator (120) is configured to receive the sensor signal (F), and based thereon generate a status message (SS) confirming that the brake command (cmd_{B}) has been effected.

10. The brake unit (200) according to any one of the claims 5 or 6, wherein the processing unit (125) is configured to:
determine the magnitude of a force applied by the at least one pressing member (211, 212) on the rotatable member (110) based on a drive current fed to the electric motor (230), and
generate, based on said force, a status message (SS) confirming that the brake command (cmd_{B}) has been effected.

11. The brake unit (200) according to any one of the preceding claims, wherein:
the brake actuator (120) further comprises a wireless interface (129) configured to receive a wireless signal representing a rotational speed of the at least one wheel (105) being mechanically linked to the rotatable member (110), and
the brake actuator (120) is configured to produce the electric brake-force signal (BF) on the further basis of the rotational speed of the at least one wheel (105).

12. The brake unit (200) according to any one of the preceding claims, wherein the gear assembly (220) comprises a worm gear arrangement (600) with a gearing ratio configured to de facto prevent the specified position between the at least one pressing member (211, 212) and the rotatable member (110) to be altered by movement of the at least one pressing member (211; 212).

13. The brake unit (200) according to any one of the preceding claims, wherein the brake actuator (120) is connected to at least one data bus (150, 160) in the rail vehicle (100), which at least one data bus (150, 160) is configured to communicate at least one of control signals (CS) and status messages (SS).

14. The brake unit (200) according to claim 13, wherein the brake actuator (120) is configured to receive the brake command (cmd_{B}) as one of the at least one control signal (CS) via one of the at least one data bus (150).
